# EUROPEAN PATENT APPLICATION

(11) **EP 2 148 262 A2**
(43) Date of publication of application: **27.01.2010**
(21) Application number: 09165704.9
(22) Date of filing: 16.07.2009
(51) Int. Cl.: G06F 3/023

(54) **Notebook computer and keyboard controller thereof**

(30) Priority: 22.07.2008 TW 97127816
(71) Applicant: Pegatron Corporation, Taipei City 112, Taiwan (CN)
(72) Inventor: Liu, Hsien-Chung, Taipei City 112 (TW)
(74) Representative: 2K Patentanwälte Blasberg Kewitz & Reichel

(57) **Abstract**

A notebook computer and a keyboard controller thereof are disclosed. A keyboard controller is coupled to a keyboard matrix having first connecting wires, a second connecting wire, and third connecting wires. The first connecting wires intersect the horizontal third connecting wires to form several first intersection points. The first intersection points correspond to several keys on a keyboard. The keyboard identification (second) connecting wire intersects the third connecting wires to form a plurality of second intersection points. Each of the first intersection points has a switch, respectively. States of the second intersection points defines a keyboard identifier. The keyboard controller includes a first group of pins coupled to the first connecting wires, a second group of pins coupled to the third connecting wires, and a keyboard identification output pin coupled to the second connecting wire.

## Description

### BACKGROUND OF THE INVENTION

### Field of Invention

The invention relates to a keyboard controller and, more particularly, to a notebook computer and a keyboard controller thereof.

### Related Art

A keyboard is an input device, and it is widely applied to electronic devices such as a personal computer, a computer display, a DVD player, an electronic cash register and so on. The electronic devices can convert an input signal generated by pressing the keyboard to a specific input instruction via a built-in keyboard driver.

Keyboards of notebook computers have different settings for different countries or different requirements. Since the notebook computers in the same batch may be sold to different places, a plurality of keyboard identifiers (IDs) are stored in a keyboard controller of the notebook computer in advance. Thus, when the notebook computer is booted, a basic input/output system (BIOS) or an embedded controller (EC) with the BIOS read the keyboard IDs, and then corresponding keyboard settings can be loaded according to the keyboard IDs.

A circuit of a conventional keyboard generally includes a keyboard controller and a keyboard matrix coupled to the keyboard controller. Pins except the keyboard matrix are used to generate the keyboard IDs in a conventional method. Generally, 1-4 additional pins are used to generate 2-16 groups of different keyboard IDs.

However, there are a plurality of types of the keyboards such as the keyboards for different languages, the keyboards of different special specifications and so on. 2-16 groups of keyboard IDs can not satisfy the plurality of types of the keyboards. The number of the additional pins has to increase for more keyboard IDs, which is inconvenient for the whole product design.

### SUMMARY OF THE INVENTION

To achieve the above objective, the embodiment of the invention provides a keyboard controller a notebook computer. The keyboard controller is coupled to a keyboard matrix having a plurality of first connecting wires, a second connecting wire, and a plurality of third connecting wires. The first connecting wires intersect the third connecting wires to form a plurality of first intersection points. The second connecting wire intersects the third connecting wires to form a plurality of second intersection points. Each of the first intersection points has a switch, respectively. The first intersection points correspond to a plurality of keys on a keyboard. States of the second intersection points defines a keyboard identifier. The keyboard controller includes a first group of pins, a second group of pins, and a keyboard identification output pin. The first group of pins is coupled to the first connecting wires. The second group of pins is coupled to the third connecting wires. The keyboard identification output pin is coupled to the second connecting wire to output a scanning signal. The second group of pins receives the scanning signal to obtain the states of the second intersection points. Thus, the keyboard identifier is determined by the states of the switches of the second intersection points. Further, the keyboard identifier may define a keyboard type and a keyboard driver and a scan code corresponding to the keyboard type.

The embodiment of the invention further provides a notebook computer including a keyboard and a keyboard controller. The keyboard has a keyboard matrix having a plurality of first connecting wires, a second connecting wire, and a plurality of third connecting wires. The first connecting wires intersect the third connecting wires to form a plurality of first intersection points. The second connecting wire intersects the third connecting wires to form a plurality of second intersection points. Each of the first intersection points has a switch, respectively. The first intersection points correspond to a plurality of keys on a keyboard. States of the second intersection points defines a keyboard identifier. The keyboard controller includes a first group of pins, a second group of pins, and a keyboard identification output pin. The first group of pins is coupled to the first connecting wires. The second group of pins is coupled to the third connecting wires. The keyboard identification output pin is coupled to the second connecting wire to output a scanning signal. The second group of pins receives the scanning signal to obtain the states of the second intersection points. The keyboard identifier may be determined by the states of the second intersection points. The keyboard identifier defines a keyboard type, a keyboard driver, and a scan code.

The keyboard controller capable of generating the keyboard identifier according to the invention read the states of the second intersection points by the keyboard identification output pin coupled to the second connecting wire to obtain the keyboard identifier. Therefore, only one additional keyboard identification output pin is needed to generate a plurality of groups of keyboard identifiers. Thus, the number of the pins for generating the keyboard identifiers decreases, thereby reducing manufacturing cost and convenient for product design.

These and other features, aspects, and advantages of the present invention will become better understood with regard to the following description, appended claims, and accompanying drawings.

### BRIEF DESCRIPTION OF THE DRAWINGS

FIG. 1 is a schematic diagram showing a keyboard controller coupled to a keyboard matrix according to an embodiment of the invention;

FIG. 2 is a schematic diagram showing a notebook computer according to an embodiment of the invention;

FIG. 3 is a schematic diagram showing a notebook computer according to another embodiment of the invention; and

FIG. 4 is a flow chart for setting a keyboard of a notebook computer according to an embodiment of the invention.

### DETAILED DESCRIPTION OF THE INVENTION

The present invention will be apparent from the following detailed description, which proceeds with reference to the accompanying drawings, wherein the same references relate to the same elements.

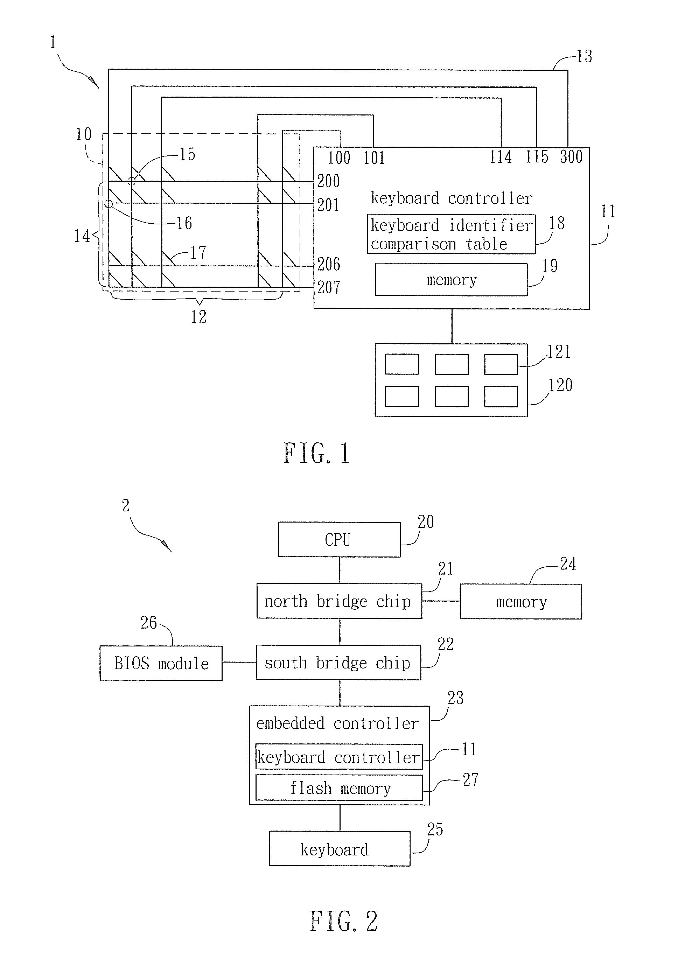

FIG. 1 is a schematic diagram showing a keyboard controller coupled to a keyboard matrix according to an embodiment of the invention. In the embodiment, a keyboard matrix 10 is an 8-by-16 matrix. However, the invention is not limited thereto. In other embodiments, the keyboard matrix may be a matrix such as a 4-by-4 matrix. In the embodiment, a keyboard identification circuit is disposed in a notebook computer.

In FIG. 1, a keyboard identification circuit 1 includes the keyboard matrix 10, a keyboard controller 11, and a keyboard 120. The keyboard matrix 10 has a plurality of first connecting wires 12, a second connecting wire 13, and a plurality of third connecting wires 14. In the embodiment, the keyboard matrix 10 is disposed in the keyboard 120.

The keyboard controller 11 includes a keyboard identifier comparison table 18 and a memory 19. The keyboard controller 11 has a second group of pins 200-207 as input pins, a first group of pins 100-115 as output pins, and a keyboard identification output pin 300. The keyboard controller 11 is coupled to the keyboard matrix 10 and the keyboard 120. In the embodiment, the number of the pins of the first group of pins (the output pins) is greater than that of the second group of pins (the input pins).

The first group of pins 100-115 of the keyboard controller 11 is coupled to the first connecting wires 12 of the keyboard matrix 10. The second group of pins 200-207 of the keyboard controller 11 is coupled to the third connecting wires 14 of the keyboard matrix 10. The keyboard identification output pin 300 of the keyboard controller 11 is coupled to the second connecting wire 13 of the keyboard matrix 10.

The first connecting wires 12 intersect the third connecting wires 14 to form a plurality of first intersection points 15. The second connecting wire 13 intersects the third connecting wires 14 to form a plurality of second intersection points 16. Each of the first intersection points 15 and the second intersection points 16 has a switch 17, respectively. The first intersection points 15 correspond to a plurality of keys 121 on the keyboard 120 , which is a working principle of the keys on a conventional keyboard. Therefore, it is not described for a concise purpose. States of the switches of the second intersection points 16 may provide states of the second intersection points to define a keyboard identifier.

In the embodiment, the keyboard matrix is an 8-by-16 matrix. The second connecting wire 13 intersects the third connecting wires 14 to form eight second intersection points. In the embodiment, each of the switches 17 has an on state and an off state. The two states are represented by 0 and 1, respectively. Thus, the eight second intersection points have 28 states in total and can define 28 keyboard identifiers.

In the embodiment, the settings of the switches 17 of the second intersection points 16 may be set in manufacture. In other embodiments, the settings of the switches 17 of the second intersection points 16 may be set by a mechanism structure such as a DIP switch, a jumper and so on or by software. For example, the switches 17 of the second intersection points 16 may be set in a basic input/output system (BIOS).

The keyboard identification output pin 300 outputs a scanning signal to allow the keyboard controller 11 to read the states of the switches of the second intersection points 16 by the second group of pins 200-207, thus to obtain a keyboard identifier. The keyboard controller 11 compares the obtained keyboard identifier with the keyboard identifier comparison table 18 to obtain a keyboard type and a keyboard driver type corresponding to the keyboard identifier. The memory 19 stores a keyboard driver and a scan code corresponding to the keyboard type.

For example, in the embodiment, when the states of the switches of the eight second intersection points between the second group of pins 200-207 of the keyboard controller and the second connecting wire 13 is 01001100, the keyboard identifier is 26+23+22=74. The keyboard controller 11 compares the keyboard identifier with the keyboard identifier comparison table 18. Supposing that the keyboard type corresponding to the keyboard identifier is China, the keyboard controller 11 calls the keyboard driver corresponding to the keyboard type and sets letters, input symbols and so on corresponding to the keys of this type of keyboard.

FIG. 2 is a schematic diagram showing a notebook computer according to an embodiment of the invention. The notebook computer 2 includes a central processing unit (CPU) 20, a north bridge chip 21, a south bridge chip 22, an embedded controller 23, a memory 24, a keyboard 25, and a BIOS module 26.

The north bridge chip 21 is coupled to the CPU 20. The south bridge chip 22 and the memory 24 are coupled to the north bridge chip 21, respectively. The embedded controller 23 and the BIOS module 26 are coupled to the south bridge chip 22, respectively. The keyboard 25 is coupled to the embedded controller 23. The embedded controller 23 further includes a keyboard controller 11 and a flash memory 27.

In FIG. 1 and FIG. 2, the keyboard controller 11 is built in the embedded controller 23 in the embodiment. When the notebook computer 2 performs a power-on self test (POST), the embedded controller 23 starts to scan the keyboard matrix 10. The keyboard identification output pin 300 and the first group of pins 100-115 output a scanning signal. The second group of pins 200-207 receives the scanning signal to obtain the states of the switches of the second intersection points 16. The keyboard identifier is defined by the state of the switches 17 of the second intersection points. In the embodiment, the settings of the switches 17 of the second intersection points 16 may be set in manufacture.

The embedded controller 23 compares the keyboard identifier with the keyboard identifier comparison table 18 to obtain a keyboard type and a keyboard driver type. According to the keyboard type and the keyboard driver type, the embedded controller 23 reads the corresponding keyboard driver and the scan code from the flash memory 27. For example, when the states of the switches of the eight second intersection points are 10000001, the keyboard identifier is 27+20=129. The embedded controller 23 compares the keyboard identifier with the keyboard identifier comparison table 18. Supposing that the keyboard type corresponding to the keyboard identifier is China, the embedded controller 23 selects the keyboard driver and the scan code corresponding to the keyboard type and sets letters and so on corresponding to the keys of this type of keyboard, thereby initializing the keyboard.

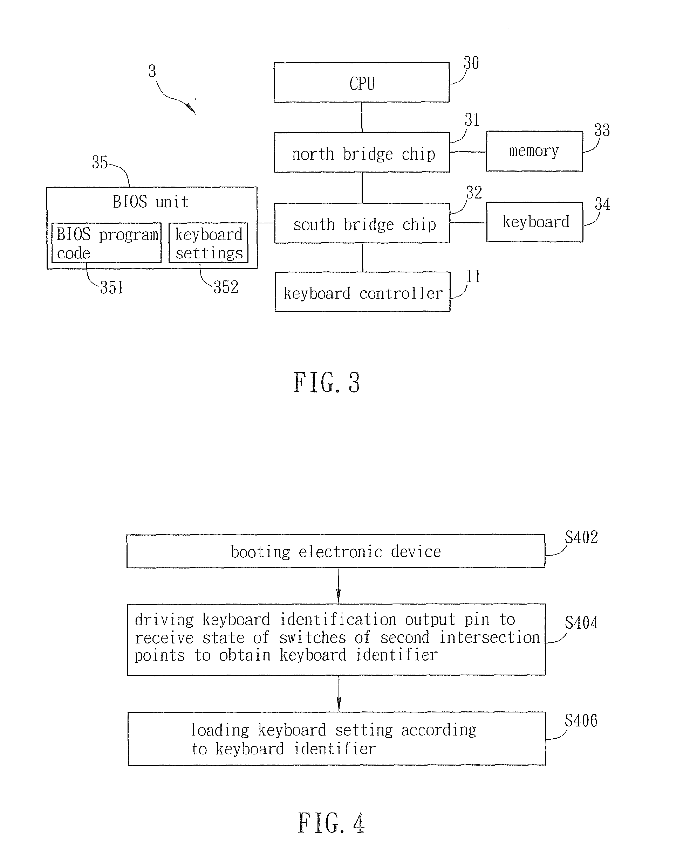

FIG. 3 is a schematic diagram showing a notebook computer according to another embodiment of the invention. The notebook computer 3 includes a CPU 30, a north bridge chip 31, a south bridge chip 32, a memory 33, a keyboard 34, a BIOS unit 35, and a keyboard controller 11.

The north bridge chip 31 is coupled to the CPU 30. The south bridge chip 32 and the memory 33 are coupled to the north bridge chip 31. The keyboard 34, the keyboard controller 11, and the BIOS unit 35 are coupled to the south bridge chip 32, respectively. In the embodiment, the BIOS unit 35 stores a BIOS program code 351 and a plurality of keyboard settings 352.

In FIG. 1 and FIG. 3, when the computer performs a POST, the BIOS program code 351 is executed. The keyboard controller 11 starts to scan the keyboard matrix 10. The keyboard identification output pin 300 and the first group of pins 100-115 output a scanning signal. The second group of pins 200-207 receives the scanning signal to obtain the state of the switches 17 of the second intersection points. Thus a keyboard identifier can be defined. The keyboard controller 11 compares the keyboard identifier with the keyboard identifier comparison table 18 to obtain a keyboard type and a keyboard driver type. According to the keyboard type and the keyboard driver type, the keyboard controller 11 reads the corresponding keyboard settings 352, such as the keyboard driver, the scan code and so on, from the BIOS unit 35, thereby initializing the keyboard.

FIG. 4 is a flow chart for setting a keyboard of a notebook computer according to an embodiment of the invention. In FIG.1 and FIG. 4, first, the notebook computer is booted in step S402. Then, in step S404, the keyboard identification output pin 300 is coupled to the keyboard matrix 10 of the notebook computer. The keyboard matrix 10 has a plurality of first intersection points 15 and a plurality of second intersection points 16. Each of the first intersection points 15 and the second intersection points 16 has a switch 17, respectively. The states of the switches of the second intersection points may provide states of the second intersection points to define the keyboard identifier. The keyboard controller 11 drives the keyboard identification output pin 300 to receive the states of the switches of the second intersection points to define the keyboard identifier. In step S406, a keyboard setting is loaded according to the keyboard identifier.

To sum up, in the invention, the keyboard controller capable of generating the keyboard identifier obtains the keyboard identifier by reading the states of the second intersection points. Thus, more keyboard identifiers are generated by fewer pins.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A keyboard controller for a notebook computer, the keyboard controller being coupled to a keyboard matrix having a plurality of first connecting wires, a second connecting wire, and a plurality of third connecting wires, the first connecting wires intersecting the third connecting wires to form a plurality of first intersection points, the second connecting wire intersecting the third connecting wires to form a plurality of second intersection points, the first intersection points corresponding to a plurality of keys on a keyboard, each of the first intersection points having a switch, respectively, and states of the second intersection points defining a keyboard identifier, the keyboard controller comprising:
a first group of pins coupled to the first connecting wires;
a second group of pins coupled to the third connecting wires; and
a keyboard identification output pin coupled to the second connecting wire to output a scanning signal, the second group of pins receiving the scanning signal to obtain the states of the second intersection points.

2. The keyboard controller according to claim 1, wherein the keyboard identifier defines a keyboard type, and defines a keyboard driver and a scan code corresponding to the keyboard type.

3. The keyboard controller according to claim 2, further comprising a memory storing the keyboard drivers and the scan codes corresponding to various kinds of the keyboard types.

4. The keyboard controller according to claim 1, wherein the keyboard controller further comprises a keyboard identifier comparison table, the keyboard controller obtains the keyboard identifier and compares the keyboard identifier with the keyboard identifier comparison table to obtain a keyboard type and a keyboard driver corresponding to the keyboard identifier.

5. The keyboard controller according to claim 1, wherein the first group of pins is output pins of the keyboard controller, the second group of pins is input pins of the keyboard controller, and the number of the pins of the first group of pins is greater than that of the second group of pins.

6. A notebook computer comprising:
a keyboard having a keyboard matrix, the keyboard matrix having a plurality of first connecting wires, a second connecting wire, and a plurality of third connecting wires, the first connecting wires intersecting the third connecting wires to form a plurality of first intersection points, the second connecting wire intersecting the third connecting wires to form a plurality of second intersection points, the first intersection points corresponding to a plurality of keys on a keyboard, each of the first intersection points having a switch, respectively, and states of the second intersection points defining a keyboard identifier; and
a keyboard controller including:
a first group of pins coupled to the first connecting wires;
a second group of pins coupled to the third connecting wires; and
a keyboard identification output pin coupled to the second connecting wire to output a scanning signal, the second group of pins receiving the scanning signal to obtain States of the second intersection points.

7. The notebook computer according to claim 6, wherein the keyboard identifier defines a keyboard type, and defines a keyboard driver and a scan code corresponding to the keyboard type.

8. The notebook computer according to claim 6, wherein the keyboard controller is built in an embedded controller, and when the notebook computer is booted, the embedded controller drives the keyboard identification output pin and reads the keyboard identifier by the states of the second intersection points.

9. The notebook computer according to claim 8, wherein the embedded controller stores a plurality of keyboard settings, and when the notebook computer is booted, the embedded controller loads the keyboard setting corresponding to the keyboard identifier from the keyboard settings according to the keyboard identifier.

10. The notebook computer according to claim 6, wherein the notebook computer further comprises a basic input/output system unit coupled to the keyboard controller, the basic input/output system unit stores a basic input/output system program code and a plurality of keyboard settings, when the notebook computer is booted, the notebook computer executes the basic input/output system program code to scan the keyboard matrix to allow the keyboard controller to obtain the keyboard identifier, and then the keyboard identifier loads the keyboard setting corresponding to the keyboard identifier from the keyboard settings.
